# EUROPÄISCHE PATENTANMELDUNG

(11) **EP 4 797 218 A1**
(43) Veröffentlichungstag der Anmeldung: **26.08.2026**
(21) Anmeldenummer: 25159277.0
(22) Anmeldetag: 21.02.2025
(51) Int. Cl.: G06V 10/56, G06V 10/774, G06V 10/82, B41F 33/00

(54) **VERFAHREN ZUR ERZEUGUNG EINES TRAININGSDATENSATZES FÜR EIN KÜNSTLICHES NEURONALES NETZ, VERFAHREN ZUM TRAINING EINES KÜNSTLICHEN NEURONALEN NETZES, VORRICHTUNG UND COMPUTERPROGRAMMPRODUKT**

(71) Anmelder: Siemens Aktiengesellschaft, 80333 München (DE)
(72) Erfinder: Bischoff, Martin, 85653 Aying, Großhelfendorf (DE); Röhrl, Verena, 85301 Schweitenkirchen (DE); Raab, Martin, 90584 Allersberg (DE); Reh, Jörg, 91096 Möhrendorf (DE)
(74) Vertreter: Siemens Patent Attorneys

(57) **Zusammenfassung**

Es wird ein Verfahren zur Erzeugung (13) eines Trainingsdatensatz (1) für ein künstliches neuronales Netz vorgeschlagen, wobei das künstliche neuronale Netz zur Ermittlung eines, mit einer Druckmarke (3) assoziierten, zweiten Anpressdruckwertes (7) aus einem ersten Abbild (4) der Druckmarke (3) ausgebildet ist, umfassend folgende Schritte:
- Bereitstellen (10) eines ersten Abbilds (4) wenigstens einer Druckmarke (3), wobei die Druckmarke (3) insbesondere kreisartig ausgebildet ist;
- Bereitstellen (11) eines ersten Anpressdruckwerts (6), wobei der erste Anpressdruckwert (6) mit dem Aufdruck der Druckmarke (3) assoziiert ist;
- Transformieren (12) des ersten Abbildes (4) auf ein zweites Abbild (5) mittels einer Koordinatentransformation, wobei die Koordinatentransformation derart ausgestaltet ist, dass die mittels des ersten Abbildes (4) erfasste Druckmarke (3), innerhalb des zweiten Abbildes (5), rechteckartig ausgebildet ist und;
- Erzeugen (13) des Trainingsdatensatzes (1), wobei der Trainingsdatensatz (1) wenigstens das zweite Abbild (5) und den zugehörigen ersten Anpressdruckwert (6) umfasst.

Weiterhin betrifft die Erfindung ein Verfahren zum Training (14) eines künstlichen neuronalen Netzes, eine Vorrichtung und ein Computerprogrammprodukt.

## Beschreibung

Die Erfindung betrifft ein Verfahren gemäß dem Oberbegriff des Patentanspruches 1, ein Verfahren gemäß dem Oberbegriff des Patentanspruches 6, eine Vorrichtung gemäß dem Oberbegriff des Patentanspruches 7 und ein Computerprogrammprodukt gemäß dem Oberbegriff des Patentanspruches 13.

Eine Entwicklung von Closed-Loop-Steuerungen und Regelungen für industrielle Maschinen wird mit Blick auf eine Erzielung von Kosteneinsparungen immer wichtiger. Regelkreise wie sie aus der Regelungstechnik bekannt sind können bereits für die einfache Regelung insbesondere einer einzelnen Regelgröße genutzt werden.

Es sind komplexe Einsatzfälle denkbar, bei denen es mehr als eine Regelgröße gibt und ein rein regelungstechnischer Ansatz an seine Grenzen stoßen kann. Solche Grenzen können neben Performanz auch steigende Kosten für Entwicklung und Betrieb eines einzelnen komplexen Regelkreises oder einer Verkettung mehrerer Regelkreise sein. Dabei zeichnen Sensoren kontinuierlich eine Maschinenleistung auf und übermitteln sie an eine Verarbeitungseinheit, die den Steuer- bzw. Regelkreis umfasst. Die Verarbeitungseinheit wertet die Daten aus und aktualisiert insbesondere Maschinenkonfigurationsdaten, um insbesondere eine Produktqualität zu gewährleisten oder zu verbessern.

Ergänzend zu regelungstechnischen Ansätzen können mittels künstlicher neuronaler Netze und/oder verwandter Technologien unter einem Sammelbegriff der künstlichen Intelligenz (Kl) ähnliche Ergebnisse, jedoch mit möglichen Ersparnissen bei Entwicklung und Betrieb, erzielt werden. Eine Hürde bei der Entwicklung von Kl-basierten Lösungen ist die Bereitstellung von Trainingsdaten. Bereits eine Sammlung von Trainingsdaten ist mit Herausforderungen verknüpft, weshalb ein anschließender effizienterer Umgang oder eine mögliche Reduktion eines Bedarfs an Trainingsdaten sinnvoll sein kann. Dies kann zu einer effizienteren Konfiguration und/oder Steuerung der jeweiligen Maschinen, insbesondere einer Druckvorrichtung führen.

Der vorliegenden Erfindung liegt die Aufgabe zugrunde, eine Druckvorrichtung effizienter zu steuern.

Die Aufgabe wird durch ein Verfahren mit den Merkmalen des unabhängigen Patentanspruches 1, sowie durch eine Vorrichtung mit den Merkmalen des unabhängigen Patentanspruches 7 gelöst. In den abhängigen Patentansprüchen sind vorteilhafte Ausgestaltungen und Weiterbildungen der Erfindung angegeben.

Das erfindungsgemäße Verfahren zur Erzeugung eines Trainingsdatensatz für ein künstliches neuronales Netz, wobei das künstliche neuronale Netz zur Ermittlung eines, mit einer Druckmarke assoziierten, zweiten Anpressdruckwertes aus einem ersten Abbild der Druckmarke ausgebildet ist, umfasst folgende Schritte:
- Bereitstellen eines ersten Abbilds wenigstens einer Druckmarke, wobei die Druckmarke insbesondere kreisartig ausgebildet ist;
- Bereitstellen eines ersten Anpressdruckwerts, wobei der erste Anpressdruckwert mit dem Aufdruck der Druckmarke assoziiert ist;
- Transformieren des ersten Abbildes auf ein zweites Abbild mittels einer Koordinatentransformation, wobei die Koordinatentransformation derart ausgestaltet ist, dass die mittels des ersten Abbildes erfasste Druckmarke, innerhalb des zweiten Abbildes, rechteckartig ausgebildet ist und;
- Erzeugen des Trainingsdatensatzes, wobei der Trainingsdatensatz wenigstens das zweite Abbild und den zugehörigen ersten Anpressdruckwert umfasst.

Der Trainingsdatensatz kann neben dem zweiten Abbild und dem zugehörigen ersten Anpressdruckwert eine mit dem zweiten Abbild assoziierte Oberflächentemperatur, insbesondere zum Zeitpunkt eines Druckvorgangs, umfassen. Der Trainingsdatensatz kann einen Zählerstand umfassen, welcher angibt wie viele Druckmarken zu einem Zeitpunkt eines Drucks bereits gedruckt wurden, wobei der Zählerstand der Druckvorrichtung bei einer Inbetriebnahme und/oder einen Werkzeugwechsel und/oder einer Wartung auf null gesetzt werden kann.

Die Assoziation kann so verstanden werden, dass insbesondere bei einem Druckvorgang der jeweilige vom Anpressdruckwert abhängige Anpressdruck in eine Beziehung mit dem Abbild eines Druckbilds gesetzt wird. Das Druckbild kann ein Resultat aus einer Anwendung dieses Anpressdrucks sein.

Das künstliche neuronale Netz kann eine Fähigkeit zu einer Multimodalität aufweisen, wobei insbesondere als Eingangswerte und/oder Ausgangswerte Parameter aus einer Vibroakustik der Druckmaschine und/oder Bilddaten und/oder Temperaturdaten und/oder elektrische Eigenschaften eines Werkstücks für eine Inferenz durch das künstliche neuronale Netz verwendet werden können.

Druckmarken können farbig, insbesondere Cyan, Magenta, Gelb, in Graustufen und/oder Schwarzweiß gefärbt sein. Druckmarken können bei einem Druckverfahren als ein Referenzpunkt für eine Druckqualität dienen. Druckmarken können so ausgebildet sein, dass sie bei einer Bestrahlung mit sichtbarem Licht für den Menschen nicht sichtbar sind, wobei das sichtbare Licht Wellenlängen von 780 nm bis 380 nm umfassen kann. Diese Druckmarken können durch Bestrahlung mit einem ultravioletten Licht für den Menschen sichtbar werden. Dies kann vorteilhaft sein, um Druckmarken in einem Printerzeugnis unter einem Tageslichteinfluss zu verbergen.

Die Druckqualität von Druckmarken kann insbesondere anhand einer Gleichmäßigkeit eines Farbauftrags und/oder einer Kantenschärfe festgelegt werden. Bei der Gleichmäßigkeit des Farbauftrags kann eine Erreichung einer erforderlichen Farbtiefe ein Analysekriterium sein.

Der Anpressdruckwert kann angeben mit wieviel Anpressdruck ein Druckwerkzeug, insbesondere ein Stempel, auf eine zu bedruckende Oberfläche angepresst wurde. Der Anpressdruck kann weiterhin als Zugdruck ausgebildet sein, wie er bspw. bei einem Zugdruckumformprozess und/oder bei einem Tiefziehen wirkt.

Die Koordinatentransformation ermöglicht die Berechnung von neuen Koordinaten eines Punktes in einem Koordinatensystem. Besonders vorteilhaft kann eine Koordinatentransformation zwischen kartesischen Koordinaten und Polarkoordinaten sein. Koordinatentransformation umfassen insbesondere eine Skalierung, Scherung und/oder Drehung von Punkten und/oder von aus mehreren Punkten bestehenden Polygonen.

Durch die vorliegende Erfindung wird ein Verfahren zur vorteilhaften Erzeugung des Trainingsdatensatzes für ein künstliches neuronales Netz bereitgestellt. Das ist es deshalb der Fall, weil die Koordinatentransformation des ersten Abbildes auf das zweite Abbild ein rechteckartiges Abbild bereitstellt. Die Transformation, insbesondere eines kreisartigen Druckmarkenabbildes, auf ein rechteckartiges Abbild ermöglicht vorteilhafterweise ein Abbild mit einer geringeren Zahl an Bildpunkten ohne Information.

Mit anderen Worten nutzt ein rechteckartiges Abbild den durch übliche digitale Bildformate vorgegebenen Bildpunktbereich besser aus als ein kreisartiges Abbild. Dieses bessere Ausnutzen des Bildpunktbereichs ermöglicht die Verringerung der Anzahl leerer Bildpunkte und weist vorteilhafterweise einen geringeren Speicherbedarf auf. Darüber hinaus ermöglicht die Transformation, insbesondere der rechteckartigen Druckmarke auf das rechteckige Abbild, dass durch das künstliche neuronale Netz detektierbare Features der Druckmarke vorteilhafterweise leichter trainiert werden können. Das ist deshalb der Fall, weil die Features im rechteckigen Abbild im Wesentlichen als gerade Kanten ausgebildet sind. Hingegen beim originellen kreisartigen Abbild können dieselben Features, insbesondere als Kreisbögen ausgebildet sein, welche komplexer für ein künstliches neuronales Netz detektierbar sind. Diese Komplexität begründet sich in einer größeren Anzahl von Parametern um eine Kurve im Vergleich zu einer Geraden zu beschreiben.

Das erfindungsgemäße Verfahren zum Training des künstlichen neuronalen Netzes, ist dadurch gekennzeichnet, dass das künstliche neuronale Netz mit dem Trainingsdatensatz trainiert wird.

Dadurch ist es vorteilhafterweise möglich ein effizienteres Training des neuronalen Netzes mit dem Trainingsdatensatz durchzuführen. Das ist deshalb der Fall, weil mittels der Verringerung der Anzahl von Bildpunkten ohne Information und die damit verbundene Erhöhung des Anteils von mit Information befüllten Bildpunkten ein effizienteres Training des künstlichen neuronalen Netzes bereitgestellt wird.

Es ergeben sich zum erfindungsgemäßen Verfahren zur Erzeugung von Trainingsdaten gleichartige, gleichwertige und gleichwirkende Vorteile.

Die erfindungsgemäße Vorrichtung umfasst eine Druckvorrichtung zum Drucken von Druckmarken, eine Recheneinheit, eine Steuerungseinheit und/oder eine Erfassungseinheit, wobei die Erfassungseinheit dazu ausgebildet ist, ein erstes Abbild einer Druckmarke zu erfassen und der Recheneinheit bereitzustellen,
dadurch gekennzeichnet, dass,
- die Recheneinheit dazu ausgebildet ist, das erste Abbild auf ein zweites Abbild mittels einer Koordinatentransformation zu transformieren, wobei die Koordinatentransformation derart ausgestaltet ist, dass die mittels des ersten Abbildes erfasste Druckmarke, innerhalb des zweiten Abbildes, rechteckartig ausgebildet ist;
- die Recheneinheit ein künstliches neuronales Netz umfasst, wobei das künstliche neuronale Netz dazu ausgebildet ist, als einen Eingangswert wenigstens ein zweites Abbild zu verwenden und als einen Ausgangswert einen zweiten Anpressdruckwert zu ermitteln; und
- die Steuerungseinheit dazu ausgebildet ist, den Anpressdruck der Druckvorrichtung in Abhängigkeit des ermittelten zweiten Anpressdruckwertes zu steuern.

Die Steuerungseinheit kann insbesondere eine speicherprogrammierbare Steuerung sein und kann zusätzlich zu einer Steuerungsfunktion eine Regelungsfunktion ermöglichen. Mit anderen Worten kann die Steuerungseinheit ebenfalls als Regelungseinheit ausgebildet sein.

Es ergeben sich zum erfindungsgemäßen Verfahren zur Erzeugung von Trainingsdaten gleichartige, gleichwertige und gleichwirkende Vorteile.

Die Druckvorrichtung kann für den Druck von Printmedien und/oder für die Erzeugung von Aufdrucken auf Verpackungen ausgebildet sein.

Weiterhin kann die Druckvorrichtung als eine Pressvorrichtung ausgebildet sein, welche einen Anpressdruck auf eine, insbesondere metallische, Oberfläche ausübt. In diesem Fall sind die Druckmarken zu den dadurch entstandenen Abdrücken äquivalent. Hierbei werden die Abdrücke durch ein Aufdrücken eines Stempels ausgebildet.

Weiterhin kann die Druckvorrichtung als eine Tiefziehvorrichtung ausgebildet sein, wobei anstelle eines Anpressdrucks ein Zugdruck, wie er bei einem Zugdruckumformprozess und/oder bei einem Tiefziehen wirkt, tritt.

Die Recheneinheit kann in einem gemeinsamen Gehäuse mit der Steuerungseinheit angeordnet sein und/oder an der Druckvorrichtung angeordnet sein. Darüber hinaus ist es möglich die Recheneinheit in einem Schaltschrank anzuordnen. Die Recheneinheit kann als eine virtuelle Recheneinheit in einer Cloud ausgebildet sein. Dadurch ist vorteilhafterweise keine lokale Recheneinheit mehr erforderlich, sofern es eine geforderte Latenz zwischen Steuerungseinheit und der virtuellen Recheneinheit erlaubt.

Die Erfassungseinheit kann insbesondere eine Kameraeinheit sein, welche insbesondere optische Aufnahmen (Fotos) und/oder Wärmebilder bereitstellt. Die Erfassungseinheit kann weiterhin als eine Time-of-Flight-Kameraeinheit und/oder ein LiDAR-Scannereinheit ausgebildet sein, welche ein Höhenprofil der Oberfläche der Druckmarke erfasst und/oder bereitstellt.

Die Erfassungseinheit kann für eine Bildgebung mittels Röntgenstrahlen oder Ultraschall ausgebildet sein. Dadurch können vorteilhafterweise Abbilder gedruckter Leiterbahnstrukturen, insbesondere für die RFID-Technik, aus metallischen oder keramischen Leitern oder Druckmarken, welche diese umfassen, bereitgestellt werden. Die Verwendung von Röntgenstrahlen oder Ultraschall kann besonders vorteilhaft für mehrschichtige Druckerzeugnisse sein, bei denen eine optische Aufnahme nur die Oberfläche abbildet.

Die Bildgebung mittels Röntgenstrahlen oder Ultraschall kann als eine schichtweise Bildgebung ausgebildet sein und entweder als eine End-of-Line-Prüfung nach einem schichtweisen Druck oder bereits in situ zwischen den einzelnen Druckschritten erfolgen.

Dadurch kann vorteilhafterweise neben der Breite einer gedruckten Struktur, zusätzlich die Tiefe und/oder Höhe der gedruckten Struktur erfasst werden. Das künstliche neuronale Netz kann Breite und/oder Tiefe und/oder Höhe der gedruckten Struktur für eine Inferenz nutzen und den Anpressdruckwert ermitteln.

Durch die Erfindung wird eine Vorrichtung zur vorteilhaften Steuerung des Anpressdrucks einer Druckvorrichtung bereitgestellt. Das ist deshalb der Fall, weil durch eine Inferenz des künstlichen neuronalen Netzes ein Rückschluss auf den durch die Druckvorrichtung angelegten Anpressdruck erfolgen kann und dadurch kann eine kosten- und zeitintensivere Interpretation des ersten Druckmarkenabbildes durch den Maschinenbediener entfallen.

Das erfindungsgemäße Computerprogrammprodukt, umfasst Befehle, die bei der Ausführung des Programms durch eine Recheneinheit, insbesondere einen Computer, diesen veranlassen, das erfindungsgemäße Verfahren zur Erzeugung eines Trainingsdatensatz für ein künstliches neuronales Netz und/oder das erfindungsgemäße Verfahren zum Training eines künstlichen neuronalen Netzes und/oder Schritte der beiden Verfahren auszuführen.

Es ergeben sich zum erfindungsgemäßen Verfahren zur Erzeugung von Trainingsdaten gleichartige, gleichwertige und gleichwirkende Vorteile.

Gemäß einer vorteilhaften Ausgestaltung der Erfindung erfolgt die Koordinatentransformation mittels Polarkoordinaten.

Dadurch ist es vorteilhafterweise möglich kreisartige und/oder kreisförmige Abbilder mit weniger leeren Bildpunkten auf ein rechteckartiges Abbild zu transformieren. Dadurch kann vorteilhafterweise das zweite Abbild mit geringerem Bedarf an Speicherplatz erzeugt werden.

Die Koordinatentransformation mittels Polarkoordinaten kann besonders vorteilhaft für kreisförmige Druckmarken sein, hierbei erstreckt sich der Radius der Polarkoordinaten entlang der radialen Ausdehnung der kreisförmigen Druckmarke.

Bei kreisartigen und/oder kreisähnlichen und/oder sonstigen N-eckigen Druckmarken kann für die Koordinatentransformation ein Flächenschwerpunkt der Druckmarke auf einem Koordinatenursprung eines Polarkoordinatensystems liegen und eine Strecke eines am weitesten vom Flächenschwerpunkt entfernten Punkt und/oder Bereich der Druckmarke für die Koordinatentransformation als Radius verwendet werden.

Gemäß einer vorteilhaften Ausgestaltung der Erfindung umfasst der Trainingsdatensatz eine Mehrzahl von Tupel und/oder Wertepaaren aus jeweils dem zweiten Abbild und dem ersten Anpressdruckwert.

Mit anderen Worten umfasst jedes Tupel ein zweites Abbild und einen zugehörigen ersten Anpressdruck.

Dadurch ist es vorteilhafterweise möglich das jeweilige zweite Abbild und den ersten Anpressdruck in Beziehung zu setzen. Das jeweilige Wertepaar und/oder Tupel verknüpft hierbei die beiden Werte. Weiterhin können für das Training und die Inferenz von multimodalen künstlichen neuronalen Netzwerken höherdimensionale n-Tupel vorgesehen sein.

In einer vorteilhaften Weiterbildung der Erfindung ist die mittels des ersten Abbildes erfasste Druckmarke innerhalb des zweiten Abbildes, rechteckförmig oder rechteckig ausgebildet.

Dadurch ist es vorteilhafterweise möglich das zweite Abbild in allen gängigen rechnergestützten Bildformaten abzuspeichern, ohne dass insbesondere leere Bildpunkte für ein Auffüllen einer Bildfläche erforderlich sind.

Gemäß einer vorteilhaften Ausgestaltung der Erfindung ist die Druckmarke kreisförmig oder als Kreis oder als ein konvexes N-Eck ausgebildet.

Dadurch ist es vorteilhafterweise möglich das Abbild der ersten Druckmarke mittels der Transformation von Polarkoordinaten in kartesische Koordinaten mit noch weniger leeren Bildpunkten auf ein rechteckartiges Abbild zu transformieren. Somit kann vorteilhafterweise das zweite Abbild mit geringerem Bedarf an Speicherplatz erzeugt werden.

Gemäß einer vorteilhaften Ausgestaltung der Erfindung werden aus dem ersten Abbild und/oder zweiten Abbild entnommene Datenpunkte bereitgestellt und der Trainingsdatensatz erzeugt, wobei der Trainingsdatensatz wenigstens das erste Abbild und/oder das zweite Abbild und/oder die Datenpunkte und/oder den zugehörigen ersten Anpressdruckwert umfasst.

Die aus den Abbildern entnommenen Datenpunkte können einzelne nummerische Werte sein, welche insbesondere dem einzelnen Bildpunkt und/oder einem aus mehreren Bildpunkten bestehenden Bildbereich und/oder dem gesamten Abbild zugeordnet sein können.

Dadurch ist es vorteilhafterweise möglich anstelle des ersten Abbilds und/oder zweiten Abbilds, lediglich die aus den Abbildern entnommenen Datenpunkte und mit den Datenpunkten assoziierte Anpressdruckwerte in den Trainingsdatensatz aufzunehmen. Der Vorteil hierbei besteht darin, dass der Trainingsdaten erheblich weniger Daten umfassen kann und das für das Training mit einem solchen Trainingsdatensatz wesentlich weniger Rechenleistung benötigt wird.

Gemäß einer vorteilhaften Ausgestaltung der Erfindung umfassen die bereitgestellten Datenpunkte wenigstens einen ersten mittleren Farbwert des jeweiligen Abbilds und/oder wenigstens einen zweiten mittleren Farbwert für jeweils wenigstens den einzelnen Bildbereich des jeweiligen Abbilds umfassen und/oder einen Schwellenwert für den jeweiligen Farbwert umfassen.

Der Farbwert für den jeweiligen Bildpunkt und insbesondere eine Farbintensität kann mittels Farbmodellen wie RGB und/oder CMYK abgebildet werden. Kameras erfassen typischerweise Bilder im RGB-Farbmodell und Druckvorrichtungen verwenden typischerweise das CMYK-Farbmodell.

Dadurch ist es vorteilhafterweise möglich trotz der möglichen Verkleinerung des Trainingsdatensatz charakteristische Eigenschaften der Abbilder, insbesondere Farbverläufe und/oder Kantenverläufe hinreichend im Trainingsdatensatz abzubilden.

Weiterhin kann eine Umwandlung zwischen RGB-Farbmodell und CMYK-Farbmodell vorgenommen werden.

Dadurch ist es vorteilhafterweise möglich, insbesondere mit dem CMYK-Farbmodell die Farbintensität in einem Kanal zu kodieren.

Gemäß einer vorteilhaften Ausgestaltung der Erfindung ist die Erfassungseinheit dazu ausgebildet, eine Mehrzahl von Druckmarken mittels des ersten Abbildes zu erfassen, wobei die Recheneinheit dazu ausgebildet ist, das erste Abbild mittels eines Segmentierens zu verarbeiten, sodass wenigstens eine der erfassten Druckmarken jeweils in einem neuen ersten Abbild bereitstellbar ist.

Das Segmentieren des Abbildes ist ein Teilgebiet der Bildverarbeitung. Hierbei werden benachbarte Bildpunkte nach einem Homogenitätskriterium zu inhaltlich zusammenhängenden Regionen zusammengefasst. Mit anderen Worten wird das erste Abbild in einzelne Druckmarken segmentiert. Darüber hinaus kann bei einem Auftreten von definierten Mustern, insbesondere von Kreisen, die Segmentierung als eine Mustererkennung ausgebildet sein.

Dadurch ist es vorteilhafterweise möglich mittels Erfassung eines ersten Abbilds, mehrere neue erste Abbilder bereitzustellen. Hierbei ist es vorteilhafterweise erforderlich, lediglich genau ein erstes Abbild zu erfassen.

In einer vorteilhaften Weiterbildung der Erfindung ist die Recheneinheit dazu ausgebildet, aus wenigstens zwei durch das künstliche neuronale Netz ermittelten Anpressdruckwerten einen weiteren Anpressdruckwert zu ermitteln.

Dadurch entfällt vorteilhafterweise eine zeit- und kostenintensivere Evaluierung, insbesondere eine manuelle Evaluierung, jedes Anpressdruckwerts.

Gemäß einer vorteilhaften Ausgestaltung ist die Recheneinheit dazu ausgebildet, den weiteren Anpressdruckwert als einen Durchschnitt aus wenigstens zwei durch das künstliche neuronale Netz ermittelten Anpressdruckwerten zu ermitteln.

Der Durchschnitt kann ebenfalls als ein Mittelwert ausgebildet sein. Insbesondere kann der Mittelwert ein harmonischer Mittelwert, geometrischer Mittelwert, arithmetischer Mittelwert, gewichteter Mittelwert, quadratischer Mittelwert und/oder ein Gastwirt-Cohen-Mittelwert sein.

Dadurch ist es vorteilhafterweise möglich eine Plausibilisierung mehrerer Anpressdruckwerte mittels eines weiteren (kombinierten) Anpressdruckwertes bereitzustellen. Das ist deshalb der Fall, weil insbesondere für aus einem ersten Abbild segmentierte neue erste Abbilder jeweils ein Anpressdruckwert bestimmbar ist. Weiterhin kann dadurch, dass die beiden Anpressdruckwerte durch ihr gemeinsames erstes Abbild in einem Zusammenhang stehen, eine größere Differenz zwischen wenigstens zwei ermittelten Anpressdruckwerten im Mittelwert sichtbar gemacht werden und vorteilhafterweise auf eine fehlende Plausibilität hindeuten.

In einer vorteilhaften Weiterbildung der Erfindung ist die Steuerungseinheit dazu ausgebildet, den zweiten Anpressdruckwert und/oder den weiteren Anpressdruckwert mit wenigstens einem Schwellenwert abzugleichen und davon abhängig den Anpressdruck der Druckvorrichtung zu steuern.

Dadurch ist es vorteilhafterweise möglich die Steuerung des Anpressdrucks zu automatisieren, wobei diese Steuerung schneller als eine manuelle Steuerung erfolgt und diese Bewertung im laufenden Druckvorgang passieren kann.

Mit anderen Worten entfällt vorteilhafterweise eine Überwachung und/oder manuelle Nachkalibrierung des Anpressdrucks während des Druckvorgangs oder gar eine Unterbrechung zwischen zwei Druckvorgängen.

Gemäß einer vorteilhaften Ausgestaltung ist die Steuerungseinheit dazu ausgebildet, bei einer Unterschreitung des Schwellenwerts für den Anpressdruck eine Erhöhung des Anpressdrucks auszulösen und/oder bei einer Überschreitung des Schwellenwerts den Anpressdruck zu verringern.

Dadurch ist es vorteilhafterweise möglich ein Druckergebnis mit einer im Wesentlichen konstanten Qualität zu erzeugen. Darüber hinaus ist vorteilhafterweise eine Steigerung der Qualität abbildbar, wenn der Schwellenwert abhängig von neuen Qualitätsmerkmalen geändert wird. Eine Kombination aus mehreren unter- und überschreitbaren Schwellenwerten ermöglicht außerdem vorteilhafterweise eine Definition von Wertefenstern.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
Figur 1 eine Darstellung einer Datenverarbeitungspipeline umfassend eine Erzeugung eines Trainingsdatensatzes, einem Training eines künstlichen neuronalen Netzes und einer Ausführung des künstlichen neuronalen Netzes; und
Figur 2 eine Darstellung eines Blockdiagramms welches die Datenflüsse zwischen einer Druckvorrichtung, einer Erfassungseinheit, einer Recheneinheit und einer Steuerungseinheit darstellt.

Gleichartige, gleichwertige oder gleichwirkende Elemente können in einer der Figuren oder in den Figuren mit denselben Bezugszeichen versehen sein.

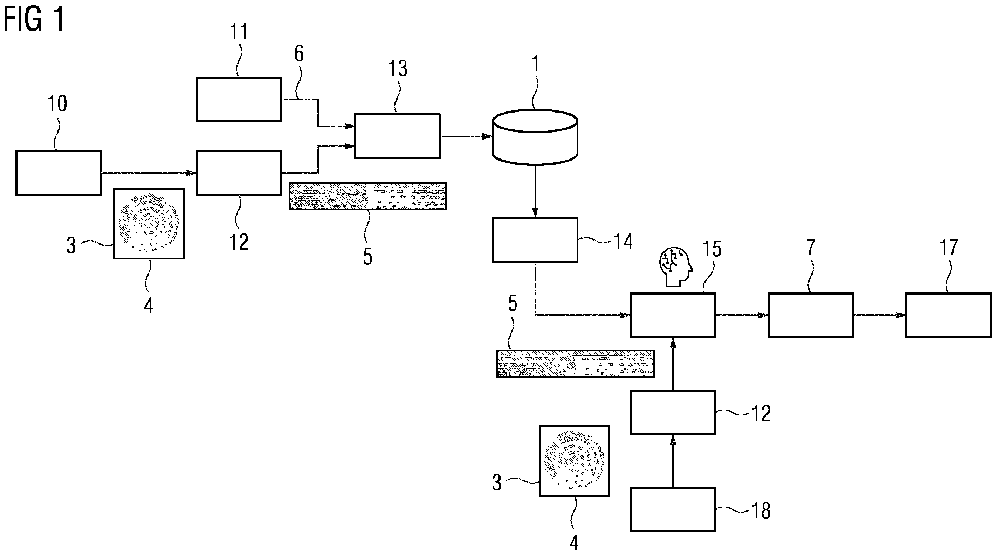

Die Figur 1 zeigt schematisch die Datenverarbeitungspipeline mit einem Bereitstellen 10 des ersten Abbildes 4 der Druckmarke 3. Dieses erste Abbild 4 wird einer Koordinatentransformation 12 unterzogen, wobei als ein Ergebnis ein zweites Abbild 5 der Druckmarke 4 erzeugt wird.

Die Erzeugung 13 des Trainingsdatensatzes 1 erfolgt durch ein Zusammenführen wenigstens eines im Schritt 11 bereitgestellten ersten Anpressdruckwertes 6 und dem jeweils assoziierten zweiten Abbild 5 der Druckmarke 4. Das Zusammenführen kann durch das Bilden von Wertepaaren und/oder Tupeln aus jeweils dem zweiten Abbild 5 und dem ersten Anpressdruckwert 6 ausgebildet werden. Weiterhin sind ergänzend zum dem Anpressdruckwert 6 und dem zweiten Abbild 5 ebenfalls weitere Informationen kombinierbar. Insbesondere werden eine Prozesstemperatur und/oder eine Luftfeuchtigkeit und/oder eine Alterung eines Druckstempels bzw. allgemein eines Werkzeugkopfs ergänzend berücksichtigt.

Der Trainingsdatensatz 1 dient für das Training 14 des künstlichen neuronalen Netzes, wobei der Trainingsdatensatz 1 für das Training 14, mit synthetischen Daten insbesondere aus einer Simulation angereichert werden kann. Weiterhin ist es möglich einen Teil des Trainingsdatensatzes 1 zu entfernen und in einem separaten Datensatz bereitzustellen. Dieser separate Datensatz kann für die spätere Evaluation des künstlichen neuronalen Netzes verwendet werden. Möglich ist bevorzugt eine Aufteilung aus 20% Evaluationsdaten und 80% Trainingsdaten. Darüber hinaus ist auch eine Aufteilung in 70% Trainingsdaten, 15% Validierungsdaten und 15% Testdaten möglich, wobei die Validierungsdaten für eine Bewertung einer Qualität des künstlichen neuronalen Netzes nach einem Trainingsschritt verwendet werden.

Die Ausführung 15 des künstlichen neuronalen Netzes sieht vor, dass wenigstens ein im Schritt 12 transformiertes zweites Abbild 5 als Eingangswert für das künstliche neuronale Netz dient, wobei das erste Abbild 4 der Druckmarke 3 im Schritt 18 erfasst wird und wiederrum als Eingangswert für die Transformation in Schritt 12 dient.

Die Ausführung 15 des künstlichen neuronalen Netzes unter Berücksichtigung des jeweiligen Eingangswertes führt zu einer Inferenz, wobei als ein Ausgangswert wenigstens ein zweiter Anpressdruckwert bereitgestellt wird. Schließlich erfolgt eine Steuerung 17 eines Anpressdruck einer Druckvorrichtung mittels des zweiten Anpressdruckwertes.

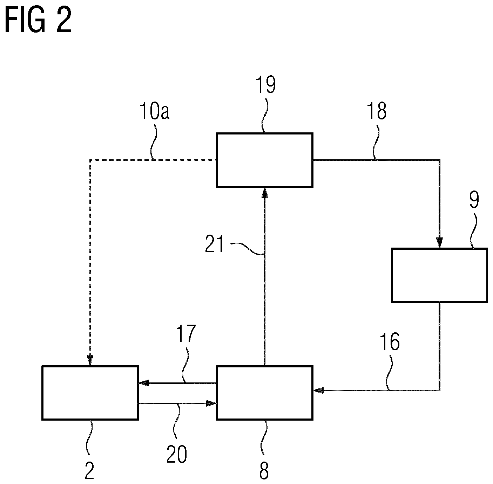

Die Figur 2 zeigt schematisch ein Blockdiagramm welches die Datenflüsse zwischen der Druckvorrichtung 2, der Erfassungseinheit 19, der Recheneinheit 9 und der Steuerungseinheit 8 darstellt.

Die Druckvorrichtung 2 stellt Sensordaten 20 für die Steuerungseinheit 8 bereit.

Die Steuerungseinheit kann periodisch und/oder abhängig von den Sensordaten 20 die Erfassung 10a des ersten Abbildes der Druckmarke im Schritt 21 auslösen. Wenn die Erfassungseinheit 19 eine Kameraeinheit ist, kann diese, auf durch die Druckvorrichtung 2 durchlaufende Druckmarken ausgerichtet sein.

Wenn die Erfassungseinheit 19 eine Druckmarke erfasst hat, stellt sie das erste Abbild der Recheneinheit 9 im Schritt 18 bereit. Die Bereitstellung 18 kann durch das zweite Abbild erfolgen, insbesondere wenn die Erfassungseinheit 19 für eine entsprechende Vorverarbeitung, insbesondere der Transformation von Abbildern ausgebildet ist.

Das Ergebnis der Inferenz 16 des künstlichen neuronalen Netzes ist abhängig vom zweiten Druckmarkenabbild, wobei das zweite Druckmarkenabbild als Eingangswert verwendet wird. Hierzu wird in Schritt 18 das erste Druckmarkenabbild bereitgestellt, dieses wird durch die Recheneinheit 9 in das zweite Druckmarkenabbild transformiert. Sollte Schritt 18 bereits das zweite Abbild bereitstellen, so kann die Transformation durch die Recheneinheit 9 entfallen. Das aus der Inferenz 16 bereitgestellte Ergebnis beziehungsweise der Ausgangswert des künstlichen neuronalen Netzes ist der zweite Anpressdruckwert. Dieser zweite Anpressdruckwert wird durch die Steuerungseinheit als eine Stellgröße für die Steuerung 17 des Anpressdruck der Druckvorrichtung 2 verwendet.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Trainingsdatensatz
- 2: Druckvorrichtung
- 3: Druckmarke
- 4: Erstes Abbild der Druckmarke
- 5: Zweites Abbild der Druckmarke
- 6: Erster Anpressdruckwert
- 7: Zweiter Anpressdruckwert
- 8: Steuerungseinheit
- 9: Recheneinheit
- 10: Bereitstellen des ersten Abbilds der Druckmarke
- 10a: Erfassen des ersten Abbilds der Druckmarke
- 11: Bereitstellen des ersten Anpressdruckwertes
- 12: Transformation des ersten Abbilds auf das zweite Abbild mittels Koordinatentransformation
- 13: Erzeugen des Trainingsdatensatzes
- 14: Training des künstlichen neuronalen Netzes
- 15: Ausführung des künstlichen neuronalen Netzes
- 16: Inferenz / Ermitteln und bereitstellen des zweiten Anpressdruckwertes
- 17: Steuerung des Anpressdruck der Druckvorrichtung mittels des zweiten Anpressdruckwert
- 18: Erfassen des ersten Druckmarkenabbildes und bereitstellen
- 19: Erfassungseinheit
- 20: Bereitstellung von Sensordaten
- 21: Auslösen der Erfassung des ersten Abbilds

## Patentansprüche

1. Verfahren zur Erzeugung (13) eines Trainingsdatensatz (1) für ein künstliches neuronales Netz, wobei das künstliche neuronale Netz zur Ermittlung eines, mit einer Druckmarke (3) assoziierten, zweiten Anpressdruckwertes (7) aus einem ersten Abbild (4) der Druckmarke (3) ausgebildet ist, umfassend folgende Schritte:
- Bereitstellen (10) eines ersten Abbilds (4) wenigstens einer Druckmarke (3), wobei die Druckmarke (3) insbesondere kreisartig ausgebildet ist;
- Bereitstellen (11) eines ersten Anpressdruckwerts (6), wobei der erste Anpressdruckwert (6) mit dem Aufdruck der Druckmarke (3) assoziiert ist;
- Transformieren (12) des ersten Abbildes (4) auf ein zweites Abbild (5) mittels einer Koordinatentransformation, wobei die Koordinatentransformation derart ausgestaltet ist, dass die mittels des ersten Abbildes (4) erfasste Druckmarke (3), innerhalb des zweiten Abbildes (5), rechteckartig ausgebildet ist und;
- Erzeugen (13) des Trainingsdatensatzes (1), wobei der Trainingsdatensatz (1) wenigstens das zweite Abbild (5) und den zugehörigen ersten Anpressdruckwert (6) umfasst.

2. Verfahren gemäß Anspruch 1, **dadurch gekennzeichnet, dass** die Koordinatentransformation mittels Polarkoordinaten erfolgt.

3. Verfahren gemäß einem der vorhergehenden Ansprüche, **dadurch gekennzeichnet, dass** der Trainingsdatensatz (1) eine Mehrzahl von Tupeln und/oder Wertepaaren aus jeweils dem zweiten Abbild (5) und dem ersten Anpressdruckwert (6) umfassen.

4. Verfahren gemäß einem der vorhergehenden Ansprüche, **dadurch gekennzeichnet, dass** die mittels des ersten Abbildes (4) erfasste Druckmarke (3), innerhalb des zweiten Abbildes (5), rechteckförmig oder rechteckig ausgebildet ist.

5. Verfahren gemäß einem der vorhergehenden Ansprüche, **dadurch gekennzeichnet, dass** die Druckmarke (3) kreisförmig oder als Kreis oder als ein konvexes N-Eck ausgebildet ist.

6. Verfahren gemäß einem der vorhergehenden Ansprüche, **dadurch gekennzeichnet, dass** aus dem ersten Abbild (4) und/oder zweiten Abbild (5) entnommene Datenpunkte bereitgestellt werden und der Trainingsdatensatz (1) erzeugt wird, wobei der Trainingsdatensatz (1) wenigstens das erste Abbild (4) und/oder das zweite Abbild (5) und/oder die Datenpunkte und/oder den zugehörigen ersten Anpressdruckwert (6) umfasst.

7. Verfahren gemäß Anspruch 6, **dadurch gekennzeichnet, dass** die bereitgestellten Datenpunkte wenigstens einen ersten mittleren Farbwert des jeweiligen Abbilds (4,5) umfassen und/oder wenigstens einen zweiten mittleren Farbwert für jeweils wenigstens einen Bildbereich des jeweiligen Abbilds (4,5) umfassen und/oder einen Schwellenwert für den jeweiligen Farbwert umfassen.

8. Verfahren zum Training (14) eines künstlichen neuronalen Netzes, **dadurch gekennzeichnet, dass** das künstliche neuronale Netz mit dem Trainingsdatensatz (1) gemäß einem der vorhergehenden Ansprüche trainiert (14) wird.

9. Vorrichtung, umfassend eine Druckvorrichtung (2) zum Drucken von Druckmarken (3), eine Recheneinheit (9), eine Steuerungseinheit (8) und/oder eine Erfassungseinheit (19), wobei die Erfassungseinheit (19) dazu ausgebildet ist, ein erstes Abbild (4) einer Druckmarke (3) zu erfassen und der Recheneinheit (9) bereitzustellen,
**dadurch gekennzeichnet, dass**,
- die Recheneinheit (9) dazu ausgebildet ist, das erste Abbild (4) auf ein zweites Abbild (5) mittels einer Koordinatentransformation zu transformieren (12), wobei die Koordinatentransformation derart ausgestaltet ist, dass die mittels des ersten Abbildes (4) erfasste Druckmarke (3), innerhalb des zweiten Abbildes (5), rechteckartig ausgebildet ist;
- die Recheneinheit (9) ein künstliches neuronales Netz umfasst, wobei das künstliche neuronale Netz dazu ausgebildet ist, als einen Eingangswert wenigstens ein zweites Abbild (5) zu verwenden und als einen Ausgangswert einen zweiten Anpressdruckwert (7) zu ermitteln und/oder bereitzustellen; und
- die Steuerungseinheit (8) dazu ausgebildet ist, den Anpressdruck der Druckvorrichtung (2) in Abhängigkeit des ermittelten zweiten Anpressdruckwertes (7) zu steuern (17).

10. Vorrichtung gemäß Anspruch 9, **dadurch gekennzeichnet, dass** die Erfassungseinheit (19) dazu ausgebildet ist, eine Mehrzahl von Druckmarken (3) mittels des ersten Abbildes (4) zu erfassen, wobei die Recheneinheit (9) dazu ausgebildet ist, das erste Abbild (4) mittels eines Segmentierens zu verarbeiten, sodass wenigstens eine der erfassten Druckmarken (3) jeweils in einem neuen ersten Abbild (4) bereitstellbar ist.

11. Vorrichtung gemäß Anspruch 9 oder 10, **dadurch gekennzeichnet, dass** die Recheneinheit (9) dazu ausgebildet ist, aus wenigstens zwei durch das künstliche neuronale Netz ermittelten Anpressdruckwerten einen weiteren Anpressdruckwert zu ermitteln.

12. Vorrichtung gemäß Anspruch 11, **dadurch gekennzeichnet, dass** die Recheneinheit (9) dazu ausgebildet ist, den weiteren Anpressdruckwert als einen Durchschnitt aus wenigstens zwei durch das künstliche neuronale Netz ermittelten Anpressdruckwerten zu ermitteln.

13. Vorrichtung gemäß einem der Ansprüche 9 bis 12, **dadurch gekennzeichnet, dass** die Steuerungseinheit (8) dazu ausgebildet ist, den zweiten Anpressdruckwert (7) und/oder den weiteren Anpressdruckwert mit wenigstens einem Schwellenwert abzugleichen und davon abhängig den Anpressdruck der Druckvorrichtung (2) zu steuern (17).

14. Vorrichtung gemäß Anspruch 13, **dadurch gekennzeichnet, dass** die Steuerungseinheit (8) dazu ausgebildet ist, bei einer Unterschreitung des Schwellenwerts für den Anpressdruck eine Erhöhung des Anpressdrucks auszulösen und/oder bei einer Überschreitung des Schwellenwerts den Anpressdruck zu verringern.

15. Computerprogrammprodukt, umfassend Befehle, die bei der Ausführung des Programms durch eine Recheneinheit (9), insbesondere einen Computer, diesen veranlassen, ein Verfahren und/oder Schritte des Verfahrens gemäß einem der Ansprüche 1 bis 5 auszuführen.
